# EUROPÄISCHE PATENTANMELDUNG

(11) **EP 1 109 389 A1**
(43) Veröffentlichungstag der Anmeldung: **20.06.2001**
(21) Anmeldenummer: 99125227.1
(22) Anmeldetag: 17.12.1999
(51) Int. Cl.: H04M 3/51, H04M 3/523

(54) **Verfahren zum Signalisieren und Verarbeiten eingehender Rufe für ein Call-Center**

(71) Anmelder: SIEMENS AKTIENGESELLSCHAFT, 80333 München (DE)
(72) Erfinder: Böhm , Markus, 81476 München (DE)

(57) **Zusammenfassung**

Die Erfindung betrifft ein Verfahren zum Signalisieren und Verarbeiten eingehender Rufe für ein Call-Center. Ferner betrifft die Erfindung eine entsprechende Vermittlungsstelle und ein entsprechendes Call-Center. Eingehende Rufe für das Call-Center werden erfindungsgemäß von der Vermittlungsstelle über eine Internet-Protokoll-Verbindung zwischen der Vermittlungsstelle und dem Call-Center zusammen mit der Teilnehmernummer eines rufenden Teilnehmers dem Call-Center signalisiert.

## Beschreibung

Die Erfindung betrifft ein Verfahren zum Signalisieren und Verarbeiten eingehender Rufe für ein Call-Center gemäß Patentanspruch 1 sowie eine Vermittlungsstelle nach Patentanspruch 5 und ein Call-Center nach Patentanspruch 8.

Call-Center dienen insbesondere zur Bearbeitung telefonischer Anfragen, beispielsweise in Verwaltungen, in Versicherungen, in Versandhäusern, beim Home- oder Direkt-Banking. Das Call-Center umfaßt hierzu eine Gruppe von Mitarbeitern, die auch Agenten genannt werden und die Anfragen telefonisch beantworten. Zur effizienten Bearbeitung der telefonischen Anfragen und Antworten sind die Agenten mit entsprechender technischer Ausrüstung versehen, wie beispielsweise PCs, über die sie auf Datenbanken mit Informationen beispielsweise über den Anrufer zugreifen können.

Ein wesentlicher Punkt bei einem Call-Center ist die Signalisierung einer telefonischen Anfrage bzw. eines eingehenden Rufes sowie der Teilnehmeranschlußnummer bzw. Teilnehmernummer des Rufenden. Ein weiterer wichtiger Punkt ist die Steuerung des signalisierten Rufs, also beispielsweise die Rufannahme und der Aufbau einer Gesprächsverbindung oder auch die Weiterleitung von Rufen an andere Agenten mit Spezialkenntnissen, falls aus dem Profil hervorgeht, daß der Anrufer eine spezialisierte Beratung benötigt.

Bisher werden in Call-Centern eingehende Rufe von einer automatischen Rufverteilung (ACD: Automatic Call Distribution) an Telefone oder PCs der Agenten zur Bearbeitung verteilt. Die Verteilung erfolgt entweder über das Call-Center eigene Telefonnetz oder über das öffentliche Telefonnetz, wenn die Agenten sich an verschiedenen Standorten befinden.

Die Signalisierung von Rufen und Teilnehmernummern kann beispielsweise über den D-Kanal von ISDN erfolgen. Besitzt der Agent einen PC mit CIT (Computer Integration Telephony), so kann der eingehende Ruf und die Teilnehmernummer beispielsweise auch direkt am Monitor des PCs signalisiert werden. Der Agent kann daraufhin mittels der Teilnehmernummer über seinen PC aus einer Datenbank ein Profil des Anrufers abfragen. Der Aufbau einer Gesprächsverbindung oder eine Weiterleitung des Rufes an einen spezialisierteren Agenten wird mittels der Signalisierungstechniken des öffentlichen digitalen ISDN-Telefonnetzes von dem Agenten selbst vorgenommen.

Allerdings weist ISDN eine sehr unterschiedliche Verbreitung in verschiedenen Ländern auf: während in Europa und insbesondere Deutschland ISDN mittlerweile eine große Verbreitung aufweist, ist beispielsweise in den USA ISDN wenig verbreitet. Das Internet-Protokoll gewinnt dagegen immer größere Verbreitung und kann mittlerweile auch schon zur Übertragung von (Telefon-)Gesprächssignalen beispielsweise im Voice-over-IP-Format genutzt werden.

Aufgabe der vorliegenden Erfindung ist es daher, ein Verfahren zum Signalisieren und Verarbeiten eingehender Rufe für ein Call-Center, das insbesondere in Verbindung mit Telekommunikationsnetzen mit analogen Signalisierungstechniken eingesetzt werden kann, sowie eine entsprechend ausgebildete Vermittlungsstelle sowie ein entsprechendes Call-Center bereitzustellen.

Diese Aufgabe wird durch ein Verfahren mit den Merkmalen von Patentanspruch 1 sowie eine Vermittlungsstelle mit den Merkmalen des Anspruchs 5 bzw. ein Call-Center gemäß Anspruch 8 gelöst. Bevorzugte Ausführungsformen des Verfahrens sind den abhängigen Patentansprüchen entnehmbar.

Wesentlich beim erfindungsgemäßen Verfahren ist eine Anbindung eines Call-Centers an eine Vermittlungsstelle über eine Internet-Protokoll-Verbindung, d. h. über eine Verbindung, über die Daten im Internet-Protokoll übertragen werden. Die Vermittlungsstelle empfängt Rufe für das Call-Center zusammen mit der Teilnehmernummer eines rufenden Teilnehmers. Die empfangenen Rufe werden von der Vermittlungsstelle als Rufe für das Call-Center detektiert und über die Internet-Protokoll-Verbindung dem Call-Center zusammen mit der Teilnehmernummer signalisiert. Das Call-Center wiederum übernimmt eine Steuerung der signalisierten Rufe durch die Internet-Protokoll-Verbindung über die Vermittlungsstelle dadurch, daß es beispielsweise Anforderungen an einen Aufbau einer Gesprächsverbindung an die Vermittlungsstelle überträgt oder einen Ruf an einen anderen Teilnehmeranschluß, beispielsweise ein anderes Call-Center mit Experten, weiterleitet.

Die Vermittlungsstelle kann insbesondere das Vermittlungssystem EWSD (Elektronisches Wählsystem Digital) der Fa. Siemens oder eine andere digitale Vermittlungsstelle sein, benötigt aber zum Übertragen über die Internet-Protokoll-Verbindung eine Internet-Protokoll-Schnittstelle, wie beispielsweise den EWSD InterNode.

Vorteilhafterweise liegen bei dem erfindungsgemäßen Verfahren die Signalisierungsinformationen über für das Call-Center eingehende Rufe im Internet-Protokoll vor und können dadurch im Call-Center in einer Internet-Sitzung direkt, insbesondere weitgehend automatisch, weiterverarbeitet werden. Ein wesentlicher Vorteil der Erfindung liegt auch darin, daß die Signalisierung und Steuerung zwischen Call-Center und Vermittlungsstelle unabhängig vom Protokoll des Telefon- bzw. Telekommunikationsnetzes, mit dem die Vermittlungsstelle und das Call-Center verbunden sind, erfolgt. Es ist somit kein ISDN notwendig, um das Verfahren einzusetzen. Das Call-Center kann die Signalisierungsinformationen selbst im Internet-Protokoll weiterverarbeiten, beispielsweise über ein Computer-Netzwerk innerhalb des Call-Centers an den PC eines Agenten weiterleiteten oder auch über eine Internet-Protokoll-Verbindung zwischen mehreren Call-Centern direkt an ein bestimmtes Call-Center weiterleiten, in dem beispielsweise Experten mit besonderem technischen Know how zur Beantwortung von Rufen bestimmter Teilnehmer sitzen. Diese Weiterleitung kann vorteilhafterweise über das weltweite Internet erfolgen, wodurch die Signalisierungsinformation an ein Call-Center im Ausland weitergeleitet werden können.

Vorzugsweise werden jedoch die signalisierten Informationen, wie eingehender Ruf und Teilnehmernummer, nicht nur beispielsweise an einen Agenten weitergeleitet, sondern direkt im Call-Center automatisch ausgewertet. Hierzu wird im Call-Center ein der Teilnehmernummer eines für das Call-Center eingehenden Rufes zugeordnetes (Anrufer-)Profil aus einer Datenbank geladen. Dieses Profil kann dann direkt über eine Ausgabeeinrichtung, insbesondere einen Monitor, beispielsweise am Arbeitsplatz eines Agenten, ausgegeben werden. Es entfällt somit die manuelle Suchabfrage in einer Datenbank nach einem Profil für eine Teilnehmernummer durch den Agent. Insbesondere da die Signalisierung als Internet-Protokoll vorliegt, ist eine Verarbeitung durch ein spezielles Programm auf dem PC einfach, beispielsweise in einem Internet-Browser mit einem entsprechenden Plug-In.

Das Profil kann auch direkt im Call-Center automatisch ausgewertet werden und dadurch die Steuerung des Rufes, dem die Teilnehmernummer zugeordnet ist, übernehmen. Beispielsweise können anhand der Teilnehmernummern eines Großkunden, der sowohl einfache als auch schwierige technische Fragestellungen hat, nach einer Auswertung, bei der anhand des Profils festgestellt wird, ob ein Anrufer allgemeine Informationen oder detaillierte technische Auskünfte benötigt, im mit der Vermittlungsstelle verbundenen Call-Center an ein Call-Center mit entsprechenden technischen Experten weitergeleitet werden. In diesem Fall bedeutet das, daß das mit der Vermittlungsstelle über die Internet-Protokoll-Verbindung kommunizierende Call-Center lediglich eine Art (intelligente) Vermittlerfunktion übernimmt.

Entsprechend den Einträgen in einem Profil sind verschiedenste Anwendungen denkbar, beispielsweise auch, daß Kunden einer Softwarefirma, die unterschiedliche Wartungsverträge inklusive technischer Hotline abgeschlossen haben, in Abhängigkeit vom Vertrag an Call-Center mit verschiedenen Dienstleistungen weitergeleitet werden. Ebenso kann ein Call-Center, in dem kein Agent erreichbar ist, einen eingehenden Ruf automatisch über die Vermittlungsstelle an ein anderes Call-Center weiterleiten.

In einer weiteren bevorzugten Ausführungsform können über die Internet-Protokoll-Verbindung zwischen Call-Center und Vermittlungsstelle zusätzlich Gesprächsverbindungen zwischen Teilnehmeranschlüssen und Call-Center aufgebaut werden. Die Gespräche werden dann vorzugsweise direkt über die Internet-Protokoll-Verbindung von der Vermittlungsstelle zum Call-Center und umgekehrt im Voice-over-IP(VolP)Format übertragen. Dies ist als Alternative zu einer Gesprächsverbindung über das herkömmliche öffentliche Telefonnetz zwischen Teilnehmer und Call-Center sinnvoll.

Dadurch, daß die Gesprächsdaten im Internet-Protokoll im Call-Center vorliegen, ist es möglich, die Gesprächsdaten über weitere Internet-Protokoll-Verbindungen beliebig weit und vor allem kostengünstig weltweit zu verteilen. Beispielsweise könnte eine Firma, die ausländische Call-Center betreibt, Rufe betreffend schwierige technische Probleme über das Internet an Experten in einem zentralen Call-Center leiten. Dies ist für einen Kunden der Firma sehr kostengünstig, da er nur das zentrale entsprechende Call-Center in seinem Land anzurufen braucht und von dort entweder über das Internet oder eine andere Datenfernverbindung mit Experten im zentralen Call-Center der Firma verbunden wird.

In Vermittlungsstellen, die auf dem digitalen Vermittlungssystem EWSD der Fa. Siemens basieren, können beispielsweise zusätzliche Einsteckkarten vorgesehen sein, welche entsprechende Mittel zur Durchführung des Verfahrens als elektronische Schaltkreise umfassen. Entsprechendes gilt natürlich für private Nebenstellenanlagen (PABX: Private Automatic Branch Exchange), die beispielsweise in großen Firmen eingesetzt werden. Weist eine solche private Nebenstellenanlage einer großen Firma Mittel zur Durchführung des Verfahrens auf, kann direkt über ein firmeninternes Netz ein Call-Center der Firma an diese Nebenstelle angebunden werden. Beispielsweise kann das firmeninterne Netz ein Intranet sein, über das Daten im Internet-Protokoll übertragen werden. Für die Firma eingehende und an das Call-Center gerichtete Rufe werden dann von der Nebenstellenanlage direkt über das firmeneigene Netz an das Call-Center weitergeleitet.

Vorzugsweise weist die Vermittlungsstelle Übertragungseinheit zur Übertragung von Gesprächen im Voice-over-IP(Internet-Protokoll)-Format auf. Dadurch können nicht nur für das Call-Center eingehende Rufe sowie die entsprechenden Teilnehmernummern signalisiert werden, sondern auch Gespräche zwischen Teilnehmern und Call-Center über die Internet-Protokoll-Verbindung zwischen Call-Center und Vermittlungsstelle übertragen werden.

Schließlich sind in einer bevorzugten Ausführungsform der Vermittlungsstelle Empfangseinheit zum Empfangen von Steuerinformationen vorgesehen, so daß vom Call-Center aus über die Internet-Protokoll-Verbindung zwischen Call-Center und Vermittlungsstelle insbesondere ein Verbindungsauf- und abbau zwischen einem Teilnehmer und dem Call-Center möglich ist. Bei dieser Ausführungsform wird beispielsweise eine Rufannahme von einem Agenten nicht über eine herkömmliche öffentliche Telefonleitung zwischen Call-Center und Vermittlungsstelle gesteuert, sondern direkt über die Internet-Protokoll-Verbindung, was beispielsweise von einem ins Rechnernetz des Call-Centers eingebundenen PC des Agentens bequem erfolgen kann.

Bevorzugt wird in dem Call-Center ein Rechner vorgesehen sein, der über eine Internet-Protokoll-Verbindung mit einer Vermittlungsstelle verbunden ist und über diese Signalisierungen von für das Call-Center detektierten Rufen und dazugehörigen Teilnehmernummern empfängt. Gleichzeitig wird dieser Rechner die empfangenen Teilnehmernummern an den Datenbank-Server weiterleiten, der wiederum zu der Teilnehmernummer ein entsprechendes (Anrufer-)Profil aus einer Datenbank sucht und lädt. Das Profil kann direkt an den PC eines Agenten übertragen werden, auf dessen Monitor es dann ausgegeben wird. Vorzugsweise wird der Datenbank-Server bei einer automatischen Auswertung der Profile die geladenen Profile an einen Auswerterechner weiterleiten, auf dem Auswerteregeln gespeichert sind, anhand derer das Profil ausgewertet wird und entsprechende Aktionen eingeleitet werden. Die Aktionen steuern insbesondere den Auf- oder Abbau von Gesprächsverbindungen oder die Weiterleitung von Rufen zwischen Call-Center und Teilnehmeranschluß.

Zusammenfassend wird sowohl durch das erfindungsgemäße Verfahren als auch die entsprechende Vermittlungsstelle und das entsprechende Call-Center eine weitgehende Automatisierung des Signalisierens und Verarbeitens von eingehenden Rufen für das Call-Center erzielt.

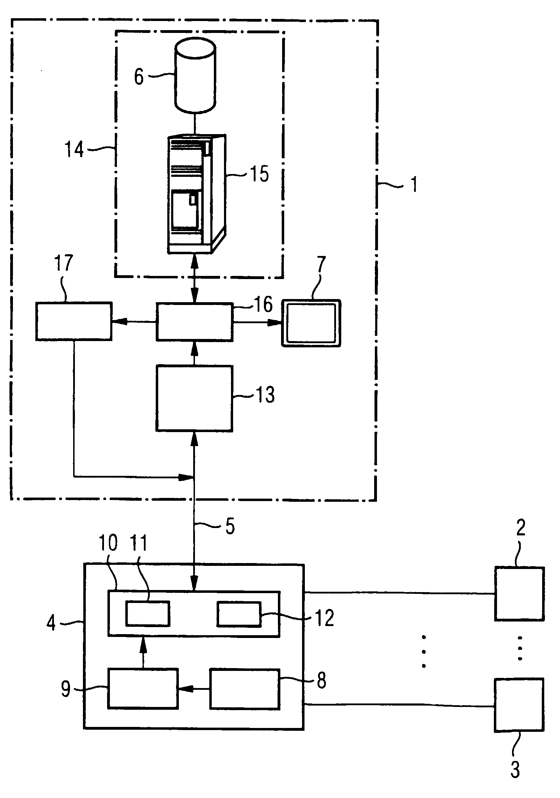

Im folgenden wird nun zusammen mit der einzigen Figur ein Ausführungsbeispiel der Erfindung beschrieben.

Eine Vielzahl von Teilnehmeranschlüssen 2, 3 ist mit einer Vermittlungsstelle 4 über das öffentliche Telefonnetz (PSTN: Public Switched Telephone Network) verbunden. Die Teilnehmeranschlüsse 2 und 3 sind analoge Anschlüsse, bei welchen im Fall von von den Teilnehmeranschlüssen ausgehenden Rufen die Teilnehmernummer, d. h. die dem Teilnehmeranschluß zugeordnete Rufnummer, an die Vermittlungsstelle 4 übertragen wird.

Die Vermittlungsstelle 4 ist über eine Internet-Protokoll-Verbindung 5 mit einem Call-Center 1 verbunden. Die Vermittlungsstelle 4 weist zum Detektieren von Rufen, die für das Call-Center 1 eingehen, einen Detektor 8 auf. In der einfachsten Ausführungsform vergleicht der Detektor 8 die vom rufenden Teilnehmeranschluß übermittelte Zielnummer mit der dem Call-Center 1 zugeordneten Rufnummer und signalisiert, falls die Zielnummer der Rufnummer des Call-Centers 1 entspricht, die Teilnehmernummer des rufenden Teilnehmeranschlusses an eine Signalisierungseinheit 9 weiter. Die Signalisierungseinheit 9 übermittelt wiederum die Teilnehmernummer an eine IP-(Internet-Protokoll)-Übertragungseinheit 10 und signalisiert dieser einen eingehenden Ruf für das Call-Center 1. Die IP-Übertragungseinheit 10 "verpackt" die übermittelte Teilnehmernummer sowie die Signalisierung für einen eingehenden Ruf in das Internet-Protokoll und überträgt die entsprechenden Daten über die Internet-Protokoll-Verbindung 5 zum Call-Center 1.

Das Call-Center 1 empfängt die Daten im Internet-Protokoll in einer Empfangseinheit 13 für Signalisierungen, die aus den empfangenen Daten im Internet-Protokoll die Teilnehmernummer und Signalisierung für einen eingehenden Ruf dekodiert. Sodann übermittelt die Empfangseinheit 13 die Teilnehmernummer an eine Such- und Ladeeinheit 16, die aus der übermittelten Teilnehmernummer einen Suchbefehl für einen Datenbank-Server 14 generiert und an diesen überträgt.

Der Datenbank-Server 14 weist einen Datenbankrechner 15 und eine damit verbundene Datenbank 6 auf. Der Datenbankrechner 15 sucht nun entsprechend dem empfangenen Suchbefehl aus der Datenbank 6 ein zu der Teilnehmernummer ggf. vorhandenes Profil, d. h. einen Datensatz. Wird ein Datensatz bzw. ein Profil gefunden, überträgt der Datenbankrechner 15 dieses an die Such- und Ladeeinheit 16, die wiederum den Datensatz bzw. das Profil auf einen Monitor 7 eines Arbeitsplatzes eines Agentens des Call-Centers anzeigt. Parallel hierzu überträgt die Such- und Ladeeinheit 16 den Datensatz bzw. das Profil an eine Auswerteeinheit 17, in der Regel zur Auswertung von Profilen gespeichert sind. Die Auswerteeinheit 17 ermittelt anhand der gespeicherten Regeln und des empfangenen Profils bzw. Datensatzes Steuerinformationen bezüglich eines Verbindungsaufbaus oder einer Weiterleitung des entsprechenden Rufes für das Call-Center 1. Die ermittelten Steuerinformationen werden von der Auswerteeinheit 17 in das Internet-Protokoll "verpackt" und über die Internet-Protokoll-Verbindung 5 an die IP-Übertragungseinheit 10 der Vermittlungsstelle 4 übertragen.

Mittels einer Empfangseinheit 12 für Steuerinformationen in der IP-Übertragungseinheit 10 werden die Steuerinformationen ausgewertet und von der Vermittlungsstelle 4 weiterverarbeitet. Die Steuerinformationen können insbesondere den Aufbau einer Gesprächsverbindung zwischen dem rufenden Teilnehmeranschluß und einem Agenten des Call-Centers 1 betreffen. Hierzu kann die Gesprächsverbindung über die Internet-Protokoll-Verbindung 5 zwischen der Vermittlungsstelle 4 und dem Call-Center 1 erfolgen.

Die IP-Übertragungseinheit 10 weist eine Voice-over-IP-Einheit 11 auf, die Gesprächssignale in das Voice-over-IP-Format zur Übertragung über die Internet-Protokoll-Verbindung 5 umsetzt. Die Gesprächssignale im Voice-over-IP-Format werden dann im Call-Center 1 direkt über das Internet an den Arbeitsplatz des Agenten weitergeleitet. Am Arbeitsplatz des Agenten müssen die empfangenen Daten im Voice-over-IP-Format in Gesprächssignale rückgewandelt werden, um über einen Lautsprecher wiedergegeben werden zu können. Umgekehrt muß das Sprechen des Agentens über ein Mikrofon in elektrische Signale umgewandelt werden, die wiederum in das Voice-over-IP-Format umgesetzt werden und über das Internet und die Internet-Protokoll-Verbindung 5 vom Call-Center 1 an die Vermittlungsstelle 4 übertragen werden. In der Vermittlungsstelle 4 setzt die Voice-over-IP-Einheit 11 die empfangenen Daten in Gesprächssignale zur Übertragung über das öffentliche Telefonnetz an den rufenden Teilnehmeranschluß um. Am Arbeitsplatz des Agenten sind Vorrichtungen zum Umsetzen der Voice-over-IP-Daten in Gesprächssignale zur Wiedergabe über einen Lautsprecher und umgekehrt Vorrichtungen zur Umwandlung der von einem Mikrofon gelieferten elektrischen Gesprächssignale in Voice-over-IP-Daten vorgesehen. Dies kann entweder ein Internet-Telefon, das für Internet-Telefonie geeignet ist, oder ein PC mit CIT-Funktionalität sein.

Die Ausführung der Erfindung ist nicht auf die oben beschriebenen Beispiele beschränkt, sondern ebenso in einer Vielzahl von Abwandlungen möglich, die im Rahmen fachgemäßen Handelns liegen. Insbesondere ist die Erfindung nicht ausschließlich über das Internet, sondern allgemein auf der Basis von Datennetzen mit geeignetem Übertragungsprotokoll - insbesondere anderen IP-Netzen - realisierbar.

## Patentansprüche

1. Verfahren zum Signalisieren und Verarbeiten eingehender Rufe für ein Call-Center (1), wobei
- die eingehenden Rufe für das Call-Center (1) zusammen mit der Teilnehmernummer eines rufenden Teilnehmers (2, 3) von einer Vermittlungsstelle (4) empfangen werden und
- die Vermittlungsstelle (4) die Rufe als Rufe für das Call-Center (1) detektiert,
**dadurch gekennzeichnet**, daß
- die Vermittlungsstelle über eine IP-Protokoll-Verbindung (5) dem Call-Center (1) die detektierten Rufe sowie die jeweils dazugehörige Teilnehmernummer signalisiert, und
- das Call-Center (1) eine Steuerung der signalisierten Rufe über die IP-Protokoll-Verbindung (5) durch die Vermittlungsstelle (4) übernimmt.

2. Verfahren nach Anspruch 1,
**dadurch gekennzeichnet**, daß
im Call-Center (1) anhand einer signalisierten Teilnehmernummer ein der Teilnehmernummer zugeordnetes Anrufer-Profil aus einer Datenbank (6) geladen wird und das Profil über eine Ausgabeeinrichtung, insbesondere einen Monitor (7), ausgegeben wird.

3. Verfahren nach Anspruch 1 oder 2,
**dadurch gekennzeichnet**,daß
im Call-Center (1) anhand einer signalisierten Teilnehmernummer ein der Teilnehmernummer zugeordnetes Anrufer-Profil aus einer Datenbank (6) geladen wird, das Anrufer-Profil ausgewertet wird und in Abhängigkeit von der Auswertung die Steuerung des Rufes, dem die Teilnehmernummer zugeordnet ist, erfolgt.

4. Verfahren nach einem der vorhergehenden Ansprüche,
**dadurch gekennzeichnet**, daß
über die IP-Protokoll-Verbindung (5) zwischen Call-Center (1) und Vermittlungsstelle (4) zusätzlich eine Gesprächsverbindung zwischen dem Teilnehmeranschluss des Teilnehmers(2, 3) und dem Call-Center (1) aufgebaut wird und Gesprächssignale im Voice-over-IP-Format über die Internet-Protokoll-Verbindung (5) übertragen werden.

5. Vermittlungsstelle (4), die zum Signalisieren von eingehenden Rufen für ein Call-Center (1)
- einen Detektor (8) für eingehende Rufe für das Call-Center (1),
- eine Signalisierungseinheit (9) zur Signalisierung der für das Call-Center (1) detektierten Rufe und jeweils dazugehöriger Teilnehmernummern und
- eine Übertragungseinheit (10) zur Übertragung der Signalisierung über eine IP-Protokoll-Verbindunq (5) aufweist.

6. Vermittlungsstelle nach Anspruch 5,
**dadurch gekennzeichnet**, daß
eine Übertragungseinheit (11) zur Übertragung von Gesprächssignalen im Voice-over-IP-Format über die IP-Protokoll-Verbindung (5) vorgesehen ist.

7. Vermittlungsstelle nach Anspruch 5 oder 6,
**dadurch gekennzeichnet**, daß
eine Empfangseinheit (12) zum Empfang von Steuerinformationen signalisierter Rufe über die Internet-Protokoll-Verbindung (5) vorgesehen ist.

8. Call-Center (1), das aufweist:
- eine Empfangseinheit (13) zum Empfang von Signalisierungen von für das Call-Center detektierten Rufen und dazugehöriger Teilnehmernummern,
- einen Datenbank-Server (14) mit einer Datenbank (6),
- eine Such- und Ladeeinheit (15, 16) zum Suchen und Laden von Anrufer-Profilen aus der Datenbank (6) des Datenbank-Servers (14),
- eine Anzeigeeinheit (7) zum Anzeigen der Anrufer-Profile und/oder
- eine Auswerteeinheit (17) zum Auswerten der Anrufer-Profile und/oder Teilnehmernummern und Senden von Steuersignalen zum Steuern von signalisierten Rufen.
